# EUROPÄISCHE PATENTSCHRIFT

(11) **EP 0 785 223 B1**
(45) Veröffentlichungstag und Bekanntmachung des Hinweises auf die Patenterteilung: **14.04.2004**
(21) Anmeldenummer: 97100321.5
(22) Anmeldetag: 10.01.1997
(51) Int. Cl.: C08J 3/075

(54) **Verwendung von Tensiden bei der Trocknung von hydrophilen, hochquellfähigen Hydrogelen**
Use of surfactants in drying hydrophilic highly swellable hydrogels
Utilisation de tensioactifs dans le séchage de hydrogels hydrophyliques à forte capacité de gonflement

(30) Priorität: 19.01.1996 DE 19601763
(43) Veröffentlichungstag der Anmeldung: 23.07.1997
(73) Patentinhaber: BASF AKTIENGESELLSCHAFT, 67056 Ludwigshafen (DE)
(72) Erfinder: Daniel, Thomas, Dr., Chesapeake, VA 23321 (US); Herfert, Norbert, Dr., 63674 Altenstadt (DE); Remmel, Gustav, 63571 Gelnhausen (DE); Riegel, Ulrich, 60386 Frankfurt am Main (DE); Stüven, Uwe, Dr.-Ing., 65812 Bad Soden (DE); Engelhardt, Fritz, Dr., Chesapeake, Virginia 23320 (US)

(56) Entgegenhaltungen:
- EP-A- 0 618 233
- US-A- 4 286 082
- ANONYMOUS: "Release agent for use in drying acrylamide] polymers - comprises amphoteric surfactant e.g. beta-alanine type for addn. to aq. polymer soln." RESEARCH DISCLOSURE, Bd. 209, Nr. 027, 10.September 1981, EMSWORTH, GB, XP002053523
- PATENT ABSTRACTS OF JAPAN vol. 004, no. 026 (C-001), 6.März 1980 & JP 55 003432 A (NITTO CHEM IND CO LTD;OTHERS: 02), 11.Januar 1980,
- PATENT ABSTRACTS OF JAPAN vol. 009, no. 012 (C-261), 18.Januar 1985 & JP 59 163427 A (KANEBO KK;OTHERS: 01), 14.September 1984,
- PATENT ABSTRACTS OF JAPAN vol. 004, no. 155 (C-029), 29.Oktober 1980 & JP 55 102612 A (MITSUBISHI CHEM IND LTD), 6.August 1980,
- ELIAS H.G.: 'Makromoleküle', 1981, HÜTHIG & WEPF VERLAG BASEL, HEIDELBERG

## Beschreibung

Die vorliegende Erfindung betrifft die Verwendung von Tensiden zur Verbesserung der Trocknungseigenschaften von hydrophilen, hochquellfähigen Hydrogelen bei der Trocknung mit Hilfe von Kontakttrocknem.

Hydrophile, hochquellfähige Hydrogele sind insbesondere Polymere aus (co)polymerisierten hydrophilen Monomeren, Pfropf(co)polymere von einem oder mehreren hydrophilen Monomeren auf eine geeignete Pfropfgrundlage, vernetzte Cellulose- oder Stärkeether oder in wäßrigen Flüssigkeiten quellbare Naturprodukte, wie beispielsweise Guarderivate.

Synthetische Produkte dieser Art können durch bekannte Polymerisationsverfahren aus geeigneten hydrophilen Monomeren, beispielsweise Acrylsäure, hergestellt werden. Bevorzugt ist die Polymerisation in wäßriger Lösung nach dem Verfahren der sogenannten Gelpolymerisation. Dabei entstehen Polymerisate in Form wäßriger Gallerten, die nach mechanischer Zerkleinerung mit geeigneten Apparaten durch bekannte Trocknungsverfahren in fester Form erhalten werden.

Ein besonders bevorzugtes Trocknungsverfahren, insbesondere für stärkehaltige bzw. allgemein Naturstoff-haltige Polymerisatgele, stellt das Verfahren der Walzentrocknung dar, das eine produktschonende Kurzzeittrocknung ermöglicht. Bei diesem Verfahren wird das mechanisch zerkleinerte Polymerisatgel durch parallel angeordnete Düsen auf eine rotierende Walze aufgegeben und mit Hilfe einer Aufgaberolle durch Druckeinwirkung auf der Walzenoberfläche verteilt, so daß sich ein möglichst homogener Gelfilm ausbildet. Während einer Umdrehung der Walze wird der Gelfilm getrocknet und mit Hilfe eines feststehenden Messers von der Walzenoberfläche abgetrennt. Die Oberflächentemperatur der Walze kann hierbei 100 bis 250°C betragen, besonders bevorzugt 140°C bis 220°C, die Rotationsgeschwindigkeit der Walze beträgt 0,1 bis 5 Upm, besonders bevorzugt 0,2 bis 1 Upm. Oberflächentemperatur und Rotationsgeschwindigkeit der Walze sind so aufeinander abzustimmen, daß das zu trocknende Produkt den gewünschten Trocknungsgrad, d.h. Restfeuchtegehalt, aufweist, wenn es nach nahezu einer Umdrehung das feststehende Messer erreicht hat.

Neben den erwähnten Vorteilen, die das Verfahren der Walzentrocknung der Polymerisatgele aufweist, existieren in der Praxis bisher jedoch auch Nachteile. So läßt sich durch die Druckeinwirkung der Aufgaberollen nur dann ein homogener Gelfilm ausbilden, wenn die Feststoffkonzentration des Gels niedrig ist, d.h. unterhalb von 20 Gew.-% Feststoff liegt. Bei höheren Feststoffkonzentrationen des Polymerisatgels wird kein homogener Gelfilm mehr ausgebildet, sondern ein Film mit unterschiedlichen Dicken wobei die Verdickungen jeweils in der Höhe der das Polymerisatgel aufbringenden Düsen anzutreffen sind. Die Einstellung des Walzentrockners muß nun so erfolgen; daß die dicksten Stellen des Gelfilms ausreichend getrocknet werden, so daß in diesem Fall die Trocknerkapazität nur unzureichend genutzt wird. Dies ist aus ökonomischer Sicht unerwünscht.

Aufgabe der vorliegenden Erfindung ist es deshalb, ein Verfahren bereitzustellen, das die genannten Nachteile nicht aufweist und das insbesondere eine höhere Ausnutzung der Walzentrocknerkapazität auch bei hohen Feststoffgehalten des zu trocknenden Polymerisatgels ermöglicht.

Überraschenderweise wurde nun gefunden, daß ein Gehalt an Tensiden in dem zu trocknenden Polymerisatgel die gestellte Aufgabe löst.

Bei Synthese und Weiterverarbeitung von Superabsorbern werden zur Erzielung bestimmter technischer Effekte bereits Tenside eingesetzt. Beispielsweise wird in der EP-A 280 541 ein Tensid mit einem HLB von 7 oder größer mit dem Ziel verwendet, ein Polymer mit schnellerer Ansauggesschwindigkeit und verbesserten Gel Blocking-Eigenschaften zu erhalten. Gleichzeitig soll das getrocknete Polymer im Konfektionierungsschritt leichter zerkleinerbar/zerbrechbar sein.

In der US 5,380,808 wird die Verwendung von anionischen und nichtionischen Tensiden zur Vermeidung bzw. Verringerung des Aneinanderklebens der einzelnen Polymerpartikel beschrieben.

In der EP-A 509 708 wird der Einsatz von nichtionischen Tensiden mit einem HLB von 3 - 10 bei der Oberflächennachvemetzung bzw. Oberflächenbehandlung der Hydrogelpartikel beschrieben.

In der US 4,914,170 wird gelehrt, anionische und nichtionische Tenside vor der Polymerisation der Monomerlösung zuzusetzen, um eine bessere Verteilung von insbesondere hydrophoben Comonomeren zu gewährleisten. Gleichzeitig wird dadurch eine bessere Benetzung der Trocknerflächen erzielt, wenn derartige Lösungen auf Walzen- oder Bandtrockner gegeben werden. Ebenfalls wird ein verbessertes Ablösen der teilgetrockneten Polymeren von den Trockneroberflächen erzielt.

Die Verwendung von ionischen Tensiden wird ebenfalls in der US 4,535,098, in der die Copolymerisation von wasserlöslichen und hydrophoben wasserunlöslichen Monomeren in wäßriger Phase beschrieben wird, erwähnt. Den Tensiden fällt dabei die Aufgabe der Micellbildung zu, um eine weitestgehend homogene Monomerlösung zur anstehenden Polymerisation zu erhalten.

In einer Vielzahl von Literaturstellen, z. B. Makromol. Chem., Makromol. Symp. 35/36, 141 - 169 (1990) oder Plast. Massy (1), 16 - 18 (UdSSR, 1990) und Patentveröffentlichungen, z. B. US 4,459,396, EP-A 464 211 und US 5,331,059 wird die Herstellung von Hydrogelen nach der inversen Suspensionspolymerisation beschrieben. Dieses Polymerisationsverfahren erfordert den Einsatz eines Tensides als Dispergiermittel zur Stabilisierung der inversen Dispersion und zur Einstellung der Tröpfchengröße.

Auch in der EP-A 312 952 wird die Mitverwendung von Tensiden bei der Gelpolymerisation in wäßriger Phase von teilneutralisierten alpha-, betaethylenisch ungesättigten Carbonsäuremonomeren beschrieben, jedoch auch hier hat das Tensid lediglich die Aufgabe eines Dispergiermittels, d. h. durch dessen Einsatz erhält man eine stabile Dispersion des Vernetzers und der Comonomeren nach der Neutralisation.

In der US 4,286,082 wird der positive Effekt von Tensiden in wäßrigen Polymergelen auf Acrylsäure-Basis im Hinblick auf eine Verbesserung der Klebrigkeit der Gele und eine Reduzierung ihrer Haftung an metallischen Oberflächen von Polymerisationsgefäß, Zerkleinerungsapparatur, Wellen, Messer, Lochscheiben usw. beschrieben.

In der EP-A 376 118 wird die Verwendung von Tensiden bei der Herstellung von gelförmigen, wasserquellbaren Copolymerisaten beschrieben, wobei bis zu 50 % der Tensidmenge der Monomerlösung vor der Polymerisation zugegeben werden können, während der restliche Anteil dem Reaktionsgemisch ab einem Polymerisationsumsatz von mindestens 60 % zugegeben wird, auf jeden Fall aber immer vor einem vollständigen Polymerisationsumsatz. Ziel dieses Verfahrens ist der Erhalt von feinteiligen, krümeligen Polymerteilchen, die nicht aneinanderkleben. Der Fachmann kann dem Stand der Technik somit die Lehre, Tenside zur Verbesserung der Trocknungseigenschaften von Polymergelen einzusetzen, nicht entnehmen.

Aus Research Disclosure, Band 209, Nr. 027, 10.09.1981, (XP002053523), ist bekannt, amphotere oberflächenaktive Mittel beim Trocknen von wasserlöslichen Acrylamidpolymeren und anderen wasserlöslichen Polymeren einzusetzen, um die Ablösung des getrockneten Polymers von der Oberfläche des Trockners zu erleichtern.

Aus der JP-A-55/003432 ist bekannt, die Trocknung von Polyacrylamidgelen, die zur Wasserbehandlung verwendet werden, in Gegenwart von Additionsprodukten von Propylenoxid an ein- oder mehrwertige Alkohole durchzuführen. Der Zusatz der genannten Additionsprodukte bewirkt, dass das Gel nur geringfügig an den Innenwänden des Trockners haftet.

Aus der JP-A-55/102612 ist bekannt, die Klebrigkeit von teilchenförmigen Polyacrylamidgelen während des Transports und des Trocknens durch Zusatz von bestimmten nichtionischen oberflächenaktiven Verbindungen zu reduzieren.

Die Aufgabe wird erfindungsgemäß gelöst mit der Verwendung von Tensiden zur Verbesserung der Spreitfähigkeit von hydrophilen Hydrogelen aus (co)polymerisierten hydrophilen Monomeren, Pfropf(co)polymeren von einem oder mehreren hydrophilen Monomeren auf eine geeignete Pfropfgrundlage, vernetzten Cellulose- oder Stärkeethern oder in wässrigen Flüssigkeiten quellbaren Naturprodukten, wie beispielsweise Guarderivate sind, die chemisch modifiziert sein können, auf der Oberfläche eines Kontakttrockners.

Im Rahmen vorliegender Erfindung bedeuten Trocknungseigenschaften insbesondere die Spreitfähigkeit des Polymergels auf der Trockneroberfläche.

Unter Kontakttrocknern werden im Rahmen vorliegender Erfindung insbesondere Walzentrockner verstanden, wie sie dem Fachmann bekannt sind.

Die Trocknung wird bevorzugt bei Temperaturen der Kontaktfläche von mindestens 120°C, besonders bevorzugt mindestens 150°C und ganz besonders bevorzugt mindestens 180°C ausgeführt.

Erfindungsgemäß können alle nichtionischen, anionischen, kationischen oder amphoteren Tenside verwendet werden, wobei solche bevorzugt sind, die in Wasser löslich oder zumindest dispergierbar sind. Der HLB-Wert der Tenside ist somit bevorzugt größer gleich drei (Definition des HLB-Wertes: siehe W.C. Griffin, J. Soc. Cosmetic Chem. 5 (1954) 249).

Geeignete nichtionische Tenside sind beispielsweise die Anlagerungsprodukte von Ethylenoxid, Propylenoxid oder Mischungen aus Ethylenoxid und Propylenoxid an Alkylphenole, aliphatische Alkohole, Carbonsäuren oder Amine. Beispielsweise eignen sich mit Ethylenoxid und/oder Propylenoxid alkoxylierte (C₈-C₂₄)-Alkylphenole. Handelsübliche Produkte dieser Art sind beispielsweise Octylphanole bzw. Nonylphenole, die jeweils mit 4 bis 20 Mol Ethylenoxid pro Mol Phenol umgesetzt sind. Andere geeignete nichtionische Tenside sind ethoxylierte (C₁₀-C₂₄)-Fettalkohole, ethoxylierte (C₁₀-C₂₄)-Fettsäuren sowie ethoxylierte (C₁₀-C₂₄)-Fettamine und ethoxylierte (C₁₀-C₂₄)-Fettsäureamide. Außerdem eignen sich partiell mit (C₁₀-C₂₄)-Fettsäuren veresterte mehrwertige (C₃-C₆)-Alkohole. Diese Ester können zusätzlich mit 2 bis 20 Mol Ethylenoxid umgesetzt sein. Als Fettalkohole, die zur Herstellung der Tenside alkoxyliert werden, eignen sich beispielsweise Palmitylalkohol, Stearyalkohol, Myristylalkohol, Laurylalkohol, Oxoalkohole sowie ungesättigte Alkohole, wie Oleylalkohol. Die Fettalkohole werden dabei zu einem solchen Grad ethoxyliert bzw. propoxyliert oder mit Ethylenoxid und Propylenoxid umgesetzt, daß die Reaktionsprodukte in Wasser löslich sind. Im allgemeinen setzt man 1 Mol der oben angegebenen Fettalkohole mit 2 bis 20 Mol Ethylenoxid und gegebenenfalls bis zu 5 Mol Propylenoxid so um, daß man Tenside erhält, die einen HLB-Wert von mehr als 8 haben.

(C₃-C₆)-Alkohole, die partiell verestert und gegebenenfalls ethoxyliert werden, sind beispielsweise Glycerin, Sorbit, Mannit und Pentaerythrit. Diese mehrwertigen Alkohole werden mit (C₁₀-C₂₄)-Fettsäuren, z.B. Ölsäure, Stearinsäure oder Palmitinsäure, partiell verestert. Die Veresterung mit den Fettsäuren erfolgt dabei höchstens bis zu einem solchen Grad, daß noch mindestens eine OH-Gruppe des mehrwertigen Alkohols unverestert bleibt. Geeignete Veresterungsprodukte sind beispielsweise Sorbitanmonooleat, Sorbitantristearat, Mannitmonooleat, Glycerinmonooleat und Glycerindioleat. Die genannten Fettsäureester mehrwertiger Alkohole, die noch mindestens eine freie OH-Gruppe enthalten, können zur Modifizierung noch mit Ethylenoxid, Propylenoxid oder Mischungen aus Ethylenoxid und Propylenoxid umgesetzt werden. Pro Mol Fettsäureester verwendet man vorzugsweise 2 bis 20 Mol der genannten Alkylenoxide. Der Ethoxylierungsgrad hat bekanntlich einen Einfluß auf den HLB-Wert der nichtionischen Tenside. Durch geeignete Wahl der Alkoxylierungsmittel und der Menge an Alkoxylierungsmittel kann man Tenside mit HLB-Werten in dem Bereich von 3 bis 20 in technisch einfacher Weise herstellen.

Eine weitere Gruppe geeigneter Tenside sind Homopolymere des Ethylenoxids, Blockcopolymere von Ethylenoxid und Alkylenoxiden, vorzugsweise Propylenoxid sowie polyfunktionelle Blockcopolymere, die beispielsweise durch sequentielle Addition von Propylenoxid und Ethylenoxid an Diamine gebildet werden. Desweiteren geeignet sind Alkylpolyglykoside, wie sie beispielsweise unter den Warenzeichen ®APG, ®Glucopan und ®Plantaren vermarktet werden. Die nichtionischen Tenside können entweder allein oder auch in Mischung miteinander verwendet werden.

Geeignete anionische Tenside sind (C₈-C₂₄)-Alkylsulfonate, die vorzugsweise in Form der Alkalisalze eingesetzt werden, (C₈-C₂₄)-Alkylsulfate, die vorzugsweise in Form der Alkali- oder Trialkanolammoniumsalze eingesetzt werden, wie z. B. Triethanolammoniumlaurylsulfat, Sulfobernsteinsäurediester, z.B. das Natriumsalz von Sulfobernsteinsäuredi-(2-ethylhexyl)ester, Sulfobernsteinsäurehalbester, wie beispielsweise Natriumlaurylsulfosuccinat oder Dinatriumfettalkoholpolyglykolethersulfosuccinat, (C₈-C₂₄)-Alkylarylsulfonsäuren sowie die Schwefelsäurehalbester von Anlagerungsprodukten von Ethylenoxid an Alkylphenole oder Fettalkohole.

Beispiele für geeignete kationische Tenside sind die Salze von Fettaminen, z.B. Kokosfettammoniummacetat, quarternäre Fettsäureaminoester, z.B. Difettsäureisopropylesterdimethylammoniummethosulfat, quarternäre Fettsäureaminoamide, z.B. N-Undecylensäurepropylamido-N-trimethyl-ammoniummethosulfat, Anlagerungsprodukte von Alkylenoxiden an Fettamine bzw. Salze von Fettaminen, wie z.B. Pentaoxethylstearylammoniumacetat oder ethoxyliertes Methyl-oleinamin-Methosulfat sowie langkettige Alkylbenzyldimethylammoniumverbindungen, wie (C₁₀-C₂₂)-Alkylbenzyldimethylammoniumchlorid.

Beispiele für geeignete amphotere Tenside sind insbesondere Verbindungen, die im gleichen Molekül mindestens ein quarternäres Ammoniumkation und mindestens ein Carboxylat- oder Sulfatanion tragen, wie beispielsweise Dimethylcarboxymethyl-Fettsäurealkylamidoammoniumbetaine oder 3-(3-Fettsäure-amido-propyl)dimethylammonium-2-hydroxypropansulfonate.

Die ionischen Tenside können allein oder auch in Mischung miteinander verwendet werden.

Bevorzugt sind die nichtionischen Tenside, besonders bevorzugt die partiell mit (C₁₀-C₂₄)-Fettsäuren veresterten mehrwertigen (C₃-C₆)-Alkohole, die mit 2 bis 20 Mol Ethylenoxid umgesetzt sind und ganz besonders bevorzugt die zuvor genannten Veresterungsprodukte, die nicht mit Ethylenoxid umgesetzt sind.

Die Tenside werden bevorzugt in Mengen von 0,01 bis 5, besonders bevorzugt 0,02 bis 2 Gew.-%, bezogen auf den Feststoffgehalt des zu trocknenden Polymerisatgeles, angewendet. Bevorzugt ist hierbei der Einsatz von nichtionischen oder anionischen Tensiden, besonders bevorzugt der Einsatz von nichtionischen Tensiden.

Das Einbringen des Tensids in das zu trocknende Polymerisatgel kann auf verschiedene Weise erfolgen. Zum einen kann das Tensid direkt in die zu polymerisierende Monomerlösung eingemischt werden, so daß nach der Polymerisation das Tensid bereits im Polymerisatgel enthalten ist. Weiterhin besteht die Möglichkeit, das Tensid in Form einer wäßrigen Lösung oder Dispersion in das bereits polymerisierte Hydrogel während der Zerkleinerung des Hydrogels mit geeigneten Apparaturen, z.B. einem Fleischwolf, einzumischen. Hierbei kann die Tensid-Lösung oder -Dispersion auch in Kombination mit anderen Komponenten zur Nachbehandlung des bereits polymerisierten Hydrogels eingesetzt werden. Beispielsweise kann die Tensid-Lösung oder -Dispersion zusammen mit Natronlauge für eine Nachneutralisation des Hydrogels oder mit einer Vernetzer-Lösung für eine zusätzliche Vernetzung des Hydrogels eingesetzt werden.

In einer bevorzugten Ausführungsform der vorliegenden Erfindung wird die Tensid-Lösung oder -Dispersion zusammen mit zu recyclendem, in einer Korngröße von kleiner gleich 0,15 mm vorliegendem, hydrophilen, hochquellfähigen Hydrogel (sogenanntes Feinkorn) dem Polymerisatgel zugegeben. Der Tensid-Zusatz bewirkt hierbei nicht nur eine Verbesserung der Trocknung des Polymerisatgels, sondern verringert auch sehr wirkungsvoll die Neigung des Feinkorns zu Gel-blocking und ermöglicht dadurch eine bessere Einmischung des Feinkorns in das Polymerisatgel. Geeignete hydrophile, hochquellfähige Hydrogele, deren Trocknungseigenschaften erfindungsgemäß verbessert werden können, sind insbesondere Polymere aus (co)polymerisierten hydrophilen Monomeren, Pfropf(co)polymere von einem oder mehreren hydrophilen Monomeren auf eine geeignete Pfropfgrundlage, vernetzte Cellulose- oder Stärkeether oder in wäßrigen Flüssigkeiten quellbare Naturprodukte, wie beispielsweise Guarderivate, die chemisch modifiziert sein können. Diese Hydrogele sind dem Fachmann bekannt.

In Frage kommen auch Mischungen aus synthetischen und natürlichen (Co)polymeren, die untereinander auch chemisch verknüpft sein können. Zur Herstellung dieser hydrophilen, hochquellfähigen Polymeren geeignete hydrophile Monomere sind beispielsweise polymerisationsfähige Säuren, wie Acrylsäure, Methacrylsäure, Vinylsulfonsäure, Vinylphosphonsäure, Maleinsäure einschließlich dessen Anhydrid, Fumarsäure, Itaconsäure, 2-Acrylamido-2-methylpropansulfonsäure, 2-Acrylamido-2-methylpropanphosphonsäure sowie deren Amide, Hydroxyalkylester und aminogruppen- oder ammoniumgruppenhaltige Ester und Amide. Desweiteren wasserlösliche N-Vinylamide oder auch Diallyldimethylammoniumchlorid. Bevorzugte hydrophile Monomere sind Verbindungen der allgemeinen Formel I 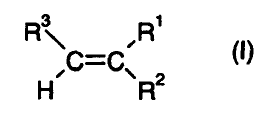 worin
- R¹: Wasserstoff, Methyl oder Ethyl,
- R²: die Gruppe -COOR⁴, die Sulfonylgruppe, die Phosphonylgruppe, die mit (C₁-C₄)-Alkanol veresterte Phosphonylgruppe oder eine Gruppe der Formel 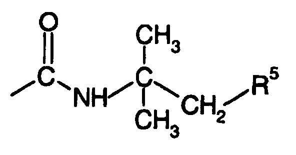
- R³: Wasserstoff, Methyl, Ethyl oder die Carboxylgruppe,
- R⁴: Wasserstoff, Amino oder Hydroxy-(C₁-C₄)-Alkyl und
- R⁵: die Sulfonylgruppe, die Phosphonylgruppe oder die Carboxylgruppe bedeuten.

Beispiele für (C₁-C₄)-Alkanole sind Methanol, Ethanol, n-Propanol oder n-Butanol.

Besonders bevorzugte hydrophile Monomere sind Acrylsäure und Methacrylsäure.

Hydrophile Hydrogele, die durch Polymerisation olefinisch ungesättigter Verbindungen erhalten werden können, sind bereits bekannt und beispielsweise beschrieben in US 4,057,521, US 4,062,817, US 4,525,527, US 4,286,082, US 4,340,706 und US 4,295,987.

Auch hydrophile Hydrogele, die durch Pfropfcopolymerisation olefinisch ungesättigter Säuren auf unterschiedliche Matrices, wie beispielsweise Polysaccharide, Polyalkylenoxide sowie deren Derivate, zugänglich sind, sind bereits bekannt und beispielsweise in der US 5,011,892, US 4,076,663 oder US 4,931,497 beschrieben.

Geeignete Pfropfgrundlagen können natürlichen oder synthetischen Ursprungs sein. Beispiele sind Stärke, Cellulose oder Cellulosederivate sowie andere Polysaccharide und Oligosaccharide, Polyalkylenoxide, insbesondere Polyethylenoxide und Polypropylenoxide, sowie hydrophile Polyester.

Geeignete Polyalkylenoxide haben beispielsweise die Formel 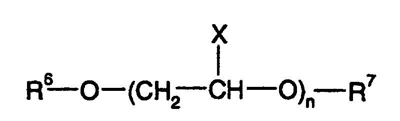 worin
- R⁶ und R⁷: unabhängiger voneinander Wasserstoff, Alkyl, Alkenyl oder Aryl,
- X: Wasserstoff oder Methyl und
- n: eine ganze Zahl von 1 bis 10 000 bedeuten.
- R⁶ und R⁷: bedeuten bevorzugt Wasserstoff, (C₁-C₄)-Alkyl, (C₂-C₆)-Alkenyl oder Phenyl.

Bevorzugte Hydrogele sind insbesondere Polyacrylate, Polymethacrylate sowie die in US 4,931,497, US 5,011,892 und US 5,041,496 beschriebene Pfropfpolymere. Der Inhalt dieser Patentschriften ist ausdrücklich auch Bestandteil vorliegender Offenbarung.

Die hydrophilen, hochquellfähigen Hydrogele, deren Trocknungseigenschaften erfindungsgemäß verbessert werden können, sind bevorzugt vernetzt, d.h. sie enthalten Verbindungen mit mindestens zwei Doppelbindungen, die in das Polymernetzwerk einpolymerisiert sind.

Geeignete Vernetzer sind insbesondere Methylenbisacryl- bzw. -methacrylamid, Ester ungesättigter Mono- oder Polycarbonsäuren von Polyolen, wie Diacrylat oder Triacrylat, z.B. Butandiol- oder Ethylenglykoldiacrylat bzw. -methacrylat sowie Trimethylolpropantriacrylat und Allylverbindungen wie Allyl(meth)acrylat, Triallylcyanurat, Maleinsäurediallylester, Polyallylester, Tetraallyloxyethan, Trialtylamin, Tetraallylethylendiamin, Allylester der Phosphorsäure sowie Vinylphosphonsäurederivate, wie sie beispielsweise in der EP-A 343 427 beschrieben sind.

Der Inhalt der EP-A 343 427 ist ausdrücklich auch Bestandteil der vorliegenden Offenbarung.

Darüber hinaus sind die hydrophilen, hochquellfähigen Hydrogele, deren Trocknungseigenschaften erfindungsgemäß verbessert werden können, besonders bevorzugt in an sich bekannter Weise in wäßriger Gelphase nachvemetzt.

Die hydrophilen, hochquellfähigen Hydrogele, deren Trocknungseigenschaften erfindungsgemäß verbessert werden können, können durch an sich bekannte Polymerisationsverfahren hergestellt werden. Bevorzugt ist die Polymerisation in wäßriger Lösung nach dem Verfahren der sogenannten Gelpolymerisation. Dabei werden 15 bis 50 Gew.%ige wäßrige Lösungen eines oder mehrerer hydrophiler Monomerer und gegebenenfalls einer geeigneten Pfropfgrundlage in Gegenwart eines Radikalinitiators bevorzugt ohne mechanische Durchmischung unter Ausnutzung des Trommdorff-Norrish-Effektes (Bios Final Rep. 363.22; Makromol. Chem. 1, 169 (1947)), polymerisiert.

Die Polymerisationsreaktion kann im Temperaturbereich zwischen 0°C und 150°C, vorzugsweise zwischen 10°C und 100°C, sowohl bei Normaldruck als auch unter erhöhtem oder erniedrigtem Druck durchgeführt werden. Wie üblich kann die Polymerisation auch in einer Schutzgasatmosphäre, vorzugsweise unter Stickstoff, ausgeführt werden.

Zur Auslösung der Polymerisation können energiereiche elektromagnetische Strahlen oder die üblichen chemischen Polymerisationsinitiatoren herangezogen werden, z.B. organische Peroxide, wie Benzoylperoxid, tert. Butylhydroperoxid, Methvlethylketonperoxid, Cumolhydroperoxid, Azoverbindungen wie Azodiisobutyronitril sowie anorganische Peroxiverbindungen wie (NH₄)₂S₂O₈ oder K₂S₂O₂ oder H₂O₂ gegebenenfalls in Kombination mit Reduktionsmitteln wie Natriumhydrogensulfit, und Eisen(II)-sulfat oder Redoxsystemen, welche als reduzierende Komponente eine aliphatische und aromatische Sulfinsäure, wie Benzolsulfinsäure und Toluolsulfinsäure oder Derivate dieser Säuren enthalten, wie z.B. Mannichaddukte aus Sulfinsäure, Aldehyden und Aminoverbindungen, wie sie in der DE-C 1 301 566 beschrieben sind.

Durch mehrstündiges Nachheizen der Polymerisatgele im Temperaturbereich 50 bis 130°C, vorzugsweise 70 bis 100°C, können die Qualitätseigenschaften der Polymerisate noch verbessert werden.

Durch die erfindungsgemäße Verwendung von Tensiden können Hydrogele mit einem Feststoffgehalt von mindestens 50 Gew% getrocknet werden.

Die Erfindung wird durch die nachfolgenden Beispiele erläutert:

### Beispiel I:

Eingesetzt wurde ein mechanisch zerkleinertes Polymerisatgel mit 20-25 Gew.-% Feststoffgehalt und 75-80 Gew.-% Wassergehalt. Das Polymerisatgel hat in seiner trockenen, granulären Form dabei folgende typische Eigenschaften:

| | |
|---|---|
| Free Swell Capacity | 50 - 60 g/g |
| Gel-Stärke (Schermodul) | 800 - 1500 Pa |
| Stärke-Gehalt | 0 - 5 Gew.-% |
| PH | 5,9 - 6,4 |

30 g des Polymerisatgels werden in eine Presse gegeben und das Gel wird 15 Sekunden lang einem Druck von 2 bar ausgesetzt. Dabei läßt sich das Gel zu einem Film auspressen, dessen Flächenausdehnung hier gleich 1,0 gesetzt wird.

Die Preßexperimente werden wiederholt. Diesmal wird dem Polymerisatgel jedoch vor der Pressung die in *Tabelle I* angegebenen Mengen an Tensid zugesetzt. Die Flächenausdehnung der entstandenen Gelfilme wird in Relation zu dem nicht-Tensid-haltigen Polymerisatgel angegeben.

**Tabelle I:**

| Tensid, welches dem Polymerisatgel zugesetzt wurde | Gew.-% Tensid bezogen auf Feststoffgehalt des Polymerisatgels | Relative Flächenausdehnung des Polymerisatgels nach der Pressung |
|---|---|---|
| Genagen® CA-050 | 0,3 Gew.-% | 3,5 |
| DSIE-Addukt | 0,6 Gew.-% | 2,8 |
| Hostapur® SAS 30 | 0,2 Gew.-% | 5,5 |
| SPAN® 20 | 0,2 Gew.-% | 4,8 |
| Natriumlaurylsulfat | 0,1 Gew.-% | 3,9 |
| Ampholyt® JB 130/K | 0,4 Gew.-% | 2,2 |

Genagen® CA-050 (Handelsprodukt der Hoechst AG) ist ein Kokosfettsäuremonoethanolamidpolyglykolether. DSIE-Addukt ist das Umsetzungsprodukt von Distearylimidazolinester mit Milchsäure. Hostapur® SAS 30 (Handelsprodukt der Hoechst AG) ist eine durch Sulfoxidation von n-Paraffinen hergestellte Mischung von n-Alkylsulfonaten. SPAN® 20 (Handelsprodukt der ICI) ist Sorbitanmonolaurat. Ampholyt® JB 130/K (Handelsprodukt der Hüls AG) ist ein Cocamidpropyl-Betain.

Aus den Daten der *Tabelle I* ist ersichtlich, daß durch den Tensid-Zusatz zu dem Polymerisatgel die Spreitfähigkeit des Gels unter Druckbelastung beträchtlich gesteigert werden kann.

### Beispiel II:

Der Feststoffgehalt des Polymerisatgels von Beispiel I wird durch Einmischung von SAP-Feinkorn, d.h. von Partikeln mit einem Durchmesser kleiner gleich 0,150 mm erhöht. Hierzu werden zu 10 Teilen Polymerisatgel (22,5 Gew.-% Feststoff) 0,8 Teile SAP-Feinkorn eingemischt, das zuvor mit 0,5 Teilen Wasser angeteigt worden ist. Der Feststoffgehalt des so hergestellten Polymerisatgels beträgt dann 27,0 Gew.-%. Das Gel wird dann dem in *Beispiel I* beschriebenen Preßversuch unterworfen. Dabei ergibt sich eine relative Flächenausdehnung des entstandenen Gelfilms von 0,7.

Diese Versuche werden nun wiederholt, jedoch werden die in *Tabelle II* angegebenen Mengen Tensid dem Wasser für die Anteigung des SAP-Feinkorns zugesetzt. Im Vergleich zu der Feinkorn-Anteigung mit dem nicht-Tensid-haltigen Wasser läßt sich bei diesen Versuchen das Feinkorn wesentlich leichter in das Polymerisatgel einmischen. Die so hergestellten Polymerisatgele (alle 27,0 Gew.-% Feststoff) werden dem Preßtest unterworfen, die erhaltenen relativen Flächenausdehnungen der Gelfilme sind in Tabelle II angegeben.

**Tabelle II:**

| Tensid, welches zusammen mit SAP-Feinkorn dem Polymerisatgel zugesetzt wurde | Gew.-% Tensid bezogen auf Feststoffgehalt des Polymerisatgels | Relative Flächenausdehnung des Gels nach der Pressung |
|---|---|---|
| Plantaren® 2000 UNPN | 0,3 Gew.-% | 2,8 |
| Tween® 20 | 0,3 Gew.-% | 3,2 |
| SPAN® 80 | 0,4 Gew.-% | 3,9 |
| Hostapur® SAS 30 | 0,2 Gew.-% | 3,5 |
| Dinatriumsalz von Rizinolsäuremonoethanolamidosulfosuccinat | 0,4 Gew.-% | 2,8 |
| C₁₂-/C₁₄-Alkylbenzyldimethylammoniumchlorid | 0,5 Gew.-% | 1,9 |

Plantaren® 2000 UNPN (Handelsprodukt der Henkel KGaA) ist ein Alkylglykosid. Tween® 20 (Handelsprodukt der ICI) ist Polyethylenoxid-(20)-Sorbitanmonooleat.

Die Ergebnisse zeigen, daß durch den Tensid-Zusatz die Spreitfähigkeit des Polymerisatgels gesteigert wird.

## Patentansprüche

1. Verwendung von Tensiden zur Verbesserung der Spreitfähigkeit von hydrophilen Hydrogelen aus (co)polymerisierten hydrophilen Monomeren, Pfropf(co)polymeren von einem oder mehreren hydrophilen Monomeren auf eine geeignete Pfropfgrundlage, vernetzten Cellulose- oder Stärkeethern oder in wässrigen Flüssigkeiten quellbaren Naturprodukten, wie beispielsweise Guarderivate sind, die chemisch modifiziert sein können, auf der Oberfläche eines Kontakttrockners.

2. Verwendung nach Anspruch 1, **dadurch gekennzeichnet, dass** die Kontakttrockner Walzentrockner sind.

3. Verwendung nach Anspruch 1 und/oder 2, **dadurch gekennzeichnet, dass** bei Temperaturen der Kontaktfläche von mindestens 120°C getrocknet wird.

4. Verwendung nach einem oder mehreren der Ansprüche 1 bis 3, **dadurch gekennzeichnet, dass** Tenside mit einem HLB-Wert von größer gleich drei verwendet werden.

5. Verwendung nach einem oder mehreren der Ansprüche 1 bis 4, **dadurch gekennzeichnet, dass** nichtionische oder anionische Tenside verwendet werden.

6. Verwendung nach einem oder mehreren der Ansprüche 1 bis 5, **dadurch gekennzeichnet, dass** die Tenside in Mengen von 0,01 bis 5 Gew.-%, bezogen auf den Feststoffgehalt des zu trocknenden Polymerisatgels, verwendet werden.

7. Verwendung nach Anspruch 1, **dadurch gekennzeichnet, dass** hydrophile Monomere Verbindungen der allgemeinen Formel I 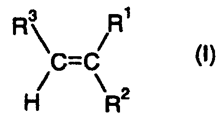 worin
R¹ Wasserstoff, Methyl oder Ethyl,
R² die Gruppe -COOR⁴, die Sulfonylgruppe, die Phosphonylgruppe, die mit (C₁-C₄)-Alkanol veresterte Phosphonylgruppe oder eine Gruppe der Formel 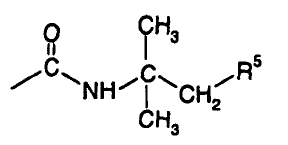
R³ Wasserstoff, Methyl, Ethyl oder die Carboxylgruppe,
R⁴ Wasserstoff, Amino oder Hydroxy-(C1-C4)-Alkyl und
R⁵ die Sulfonylgruppe, die Phosphonylgruppe oder die Carboxylgruppe bedeuten, sind.

8. Verwendung nach Anspruch 7 und/oder 8, **dadurch gekennzeichnet, dass** hydrophile Monomere Acrylsäure oder Methacrylsäure sind.

9. Verwendung nach einem oder mehreren der Ansprüche 1 bis 9, **dadurch gekennzeichnet, dass** Hydrogele mit einem Feststoffgehalt von mindestens 50 Gew.-% getrocknet werden.

## Claims

1. The use of surfactants to improve the spreadability of hydrophilic hydrogels comprising (co)polymerized hydrophilic monomers, graft (co)polymers of one or more hydrophilic monomers on an appropriate graft base, crosslinked cellulose ethers or starch ethers, or natural products, for example guar derivatives, with or without chemical modification, which can be swollen in aqueous liquids, on the surface of a contact dryer.

2. The use as claimed in claim 1, wherein the contact dryers are roll dryers.

3. The use as claimed in claim 1 and/or 2, wherein drying takes place at contact-surface temperatures of at least 120°C.

4. The use as claimed in one or more of claims 1 to 3, wherein surfactants having an HLB value of greater than or equal to three are used.

5. The use as claimed in one or more of claims 1 to 4, wherein nonionic or anionic surfactants are used.

6. The use as claimed in one or more of claims 1 to 5, wherein the surfactants are used in amounts of from 0.01 to 5% by weight, based on the solids content of the polymer gel to be dried.

7. The use as claimed in claim 1, wherein hydrophilic monomers are compounds of the formula I 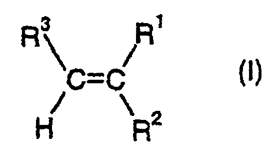 in which
R¹ is hydrogen, methyl or ethyl,
R² is the group -COOR⁴, sulfonyl, phosphonyl, phosphonyl esterified with (C₁-C₄)-alkanol, or a group of the formula 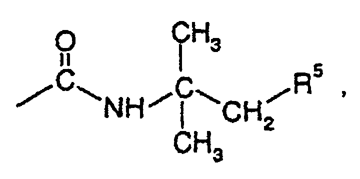 R³ is hydrogen, methyl, ethyl or carboxyl,
R⁴ is hydrogen, amino or hydroxy-(C₁-C₄)-alkyl, and
R⁵ is sulfonyl, phosphonyl or carboxyl.

8. The use as claimed in claim 7, wherein hydrophilic monomers are acrylic acid or methacrylic acid.

9. The use as claimed in one or more of claims 1 to 8, wherein hydrogels having a solids content of at least 50% by weight are dried.

## Revendications

1. Utilisation de tensioactifs pour améliorer la faculté d'étalement d'hydrogels hydrophiles constitués de monomères hydrophiles (co)polymérisés, de (co)polymères greffés d'un ou plusieurs monomères hydrophiles sur une base de greffage appropriée, d'éthers de cellulose ou d'amidons réticulés ou de produits naturels gonflables dans des liquides aqueux, comme par exemple des dérivés de guar, qui peuvent être chimiquement modifiés, sur la surface d'un sécheur à contact.

2. Utilisation selon la revendication 1, **caractérisée en ce que** les sécheurs à contact sont des sécheurs à tambour.

3. Utilisation selon la revendication 1 et/ou 2, **caractérisée en ce que** l'on opère le séchage à des températures des surfaces de contact d'au moins 120°C.

4. Utilisation selon l'une ou plusieurs des revendications 1 à 3, **caractérisée en ce que** l'on utilise des tensioactifs d'une valeur HLB supérieure à trois.

5. Utilisation selon l'une ou plusieurs des revendications 1 à 4, **caractérisée en ce que** l'on utilise des tensioactifs non ioniques ou anioniques.

6. Utilisation selon l'une ou plusieurs des revendications 1 à 5, **caractérisée en ce que** les tensioactifs sont utilisés en des quantités de 0,01 à 5% en poids, par rapport à la teneur en solides du gel de polymère à sécher.

7. Utilisation selon la revendication 1, **caractérisée en ce que** les monomères hydrophiles sont des composés de la formule générale I 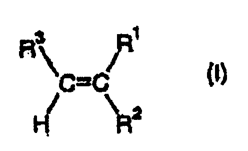 dans laquelle
R¹ représente de l'hydrogène ou un radical méthyle ou éthyle,
R² représente le groupe -COOR⁴, le groupe sulfonyle, le groupe phosphonyle, le groupe phosphonyle estérifié avec des alcanols en C₁ à C₄ ou un groupe de formule 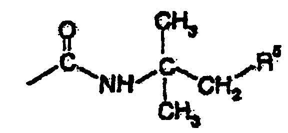
R³ représente de l'hydrogène ou un radical méthyle, éthyle ou le groupe carboxyle,
R⁴ représente de l'hydrogène ou un groupe amino ou hydroxy(C₁-C₄)alkyle et
R⁵ représente le groupe sulfonyle, le groupe phosphonyle ou le groupe carboxyle.

8. Utilisation selon la revendication 7 et/ou 8, **caractérisée en ce que** les monomères hydrophiles sont de l'acide acrylique ou de l'acide méthacrylique.

9. Utilisation selon l'une ou plusieurs des revendications 1 à 9, **caractérisée en ce que** l'on sèche des hydrogels d'une teneur en solides d'au moins 50% en poids.
